# EUROPEAN PATENT APPLICATION

(11) **EP 2 000 930 A2**
(43) Date of publication of application: **10.12.2008**
(21) Application number: 08157815.5
(22) Date of filing: 06.06.2008
(51) Int. Cl.: G06F 17/30, G01C 21/34

(54) **Data integrity checking for set-oriented data stores**

(30) Priority: 09.06.2007 US 954950 P; 30.05.2008 US 130508
(71) Applicant: Honeywell International Inc., Morristown NJ 07960 (US)
(72) Inventor: Richardson, James P., St. Paul, MN 55102 (US); Cornhill, Dennis, St. Paul, MN 55104 (US)
(74) Representative: Buckley, Guy Julian

(57) **Abstract**

A method for determining data integrity for a set-oriented data store provides an integrity check mechanism within an application framework that provides object check values for one or more data objects in the set-oriented data store. The integrity check mechanism stores one or more predicate check values corresponding to predefined query predicates against the set-oriented data store, with each stored predicate check value updated as the set-oriented data store is updated such that the stored predicate check value is consistent with the object check values of all of the data objects that satisfy the corresponding predefined query predicate. When a query is submitted to the set-oriented data store, the integrity check mechanism verifies the integrity of a query result set by comparing one or more of the previously-stored predicate check values for the submitted query with corresponding predicate check values determined from the query result set.

## Description

### CROSS REFERENCE TO RELATED APPLICATIONS

This application claims the benefit of priority to U.S. Provisional App. No. 60/954,950, filed on Aug. 9, 2007, the disclosure of which is incorporated herein by reference in its entirety.

### GOVERNMENT INTEREST STATEMENT

The U.S. Government may have certain rights in the present invention under contract no. W56HZV-05-C-0724 awarded by the United States Army.

### BACKGROUND

Contemporary computer operating systems (OS) are limited with respect to storage and retrieval of safety-critical data. For example, corruption of safety critical application data that occurs between when the data is stored and subsequently retrieved must be detected with high assurance. Furthermore, common OS software applications used to store and retrieve set-oriented data on machine-readable storage media (for example, a relational database) are typically very large and complex, and function less reliably than demanded by safety-critical applications. Consequently, it becomes impractical to provide data integrity checking to the high degree required for these safety-critical applications.

Typically, safety-critical applications are programmed to maintain safety under either one of at least two conditions: (1) the safety critical data is known to be valid and the application is enabled to safely deliver "full value;" and (2) the safety critical data is known to be "invalid" or "missing" (where the "invalid" or "missing" cases are treated similarly) and the application is restricted to the safe delivery of a "reduced value." When safety-critical data is stored using a low-integrity OS application, neither the data storage software requirements for the OS nor integrity of the machine-readable storage media meet a desired level of safety-critical requirements.

In addition, data objects in a set-oriented data store are susceptible to corruption over time. In particular, there are serious consequences when one or more data objects that represent life-threatening hazards at a particular location (for example, a land mine) are not properly inserted in or retrieved from a set-oriented data store. There is a need for improvements in data integrity checking for set-oriented data stores.

### SUMMARY

The following specification provides for at least one embodiment of data integrity checking for set-oriented data stores. This summary is made by way of example and not by way of limitation. It is merely provided to aid the reader in understanding some aspects of at least one embodiment described in the following specification.

Particularly, in one embodiment, a method for determining data integrity in a set-oriented data store provides an integrity check mechanism within an application framework for the set-oriented data store. The application framework provides object check values for one or more data objects in the set-oriented data store. The method uses the integrity check mechanism to store one or more predicate check values corresponding to predefined query predicates against the set-oriented data store, with each stored predicate check value updated as the set-oriented data store is updated such that the stored predicate check value is consistent with the object check values of all of the data objects that satisfy the corresponding predefined query predicate. When a query is submitted to the set-oriented data store to access at least a portion of data within the data objects, the method verifies the integrity of a query result set containing the accessed data by comparing one or more of the previously-stored predicate check values for the submitted query with corresponding predicate check values determined from the query result set.

### BRIEF DESCRIPTION OF THE DRAWINGS

These and other features, aspects, and advantages are better understood with regard to the following description, appended claims, and accompanying drawings where:
FIG. 1 is a block diagram of an embodiment of an application framework for a set-oriented data store with data integrity checking;
FIG. 2 is a flow diagram of an embodiment of a data object insert operation for a set-oriented data store with data integrity checking;
FIG. 3 is a flow diagram of an embodiment of a data object delete operation for a set-oriented data store with data integrity checking;
FIG. 4 is a flow diagram of an embodiment of a data query operation for a set-oriented data store with data integrity checking; and
FIG. 5 is a block diagram of an embodiment of an electronic system having a set-oriented data store with data integrity checking.

The various described features are drawn to emphasize features relevant to the embodiments disclosed. Like reference characters denote like elements throughout the figures and text of the specification.

### DETAILED DESCRIPTION

Embodiments disclosed herein relate to data integrity checking for a set-oriented data store. In particular, at least one embodiment relates to a data integrity checking mechanism for safety-critical computer application software in navigation devices. In one implementation, the data integrity checking mechanism determines data integrity using a predicate check value for data objects stored in and retrieved from the set-oriented data store. Moreover, the predicate check value is verifiable at the time the data object is added to the data store, and updated whenever the data object is updated or deleted from the store.

The data integrity checking discussed herein provides for storage and retrieval of data such that any corruption of the data that may have occurred between storage and retrieval, or failure of the OS services for storage and retrieval, can be detected with high assurance with substantially reduced computing overhead. Examples of safety-critical computer application software considered herein include, without limitation, operating software and firmware for recording safety-critical data in medical devices, manned ground vehicles, or for the control of hazardous industrial and energy production processes.

In at least one embodiment of the set-oriented data store, the data integrity checking discussed herein ensures the detection of potential data corruption of one or more data objects incrementally stored in and selectively retrieved from a relational database, including a relational database management system (RDBMS), an object-oriented database management system (ODBMS), or any other data management software that provides selective retrieval of data objects based on an application-provided query predicate. For example, Structured Query Language (SQL) defines a standard model for relational databases, where data is structured as a set of tables. Each table has a (normally fixed) set of columns and a variable number of rows. A plurality of SQL commands are defined for manipulating data in the tables. The flexibility of the various SQL data manipulation commands available (for example, SELECT, INSERT, UPDATE, and DELETE, among others) are supplemented with the data integrity checking discussed here.

For purposes of this description, a query predicate is a condition met by all retrieved data objects and no other data objects in the data store. The predicate is typically expressed as a condition on the values of attributes associated with the data object. It is well known how to verify the integrity of each data object that is retrieved using an object check value such as a cyclic redundancy check (CRC) that is computed and stored at the time the data object is added to the data store, and updated whenever the data object is updated.

In one implementation, the functions of determining the predicate check value upon storage of one or more of the data objects and verifying the predicate check value upon retrieval of similar data objects is implemented in a small, high-assurance software component that is layered on top of a lower-assurance data storage component for the set-oriented data store. Since verifying the checksum for each of the data objects provides little to no assurance that all of the data objects that match the predicate are returned to the application, the integrity checking discussed herein verifies that all of the data objects meeting the application-provided query predicate are in fact retrieved. Moreover, any omission(s) are detectable with a substantially high level of probability.

Moreover, any attempts to corrupt and manipulate the one or more data objects are detected and isolated using the data integrity checking discussed herein. In at least one implementation, the data integrity checking included in the high-assurance software component discussed above provides a defense against malicious corruption of data with a data integrity checking mechanism. The data integrity checking mechanism prevents a malicious attack on the set-oriented data store and (potentially) recreating an illegitimate checksum for the corrupted data, thus causing a subsequent integrity check on the corrupted data to pass.

In one implementation, predicate check values are stored for each of a set of predefined queries against the set-oriented data store, and updated whenever data objects are inserted, updated, or deleted. When a query is submitted to the set-oriented data store, predicate check value(s) are computed from the data objects in the query result, and compared to the stored predicate check value(s). The data objects are validated when the stored predicate check values and the corresponding computed predicate check values match. In addition, the integrity checking discussed herein verifies the integrity of the data stored in and retrieved from the set-oriented data store when the data becomes corrupted by the data store or by the underlying system software or hardware.

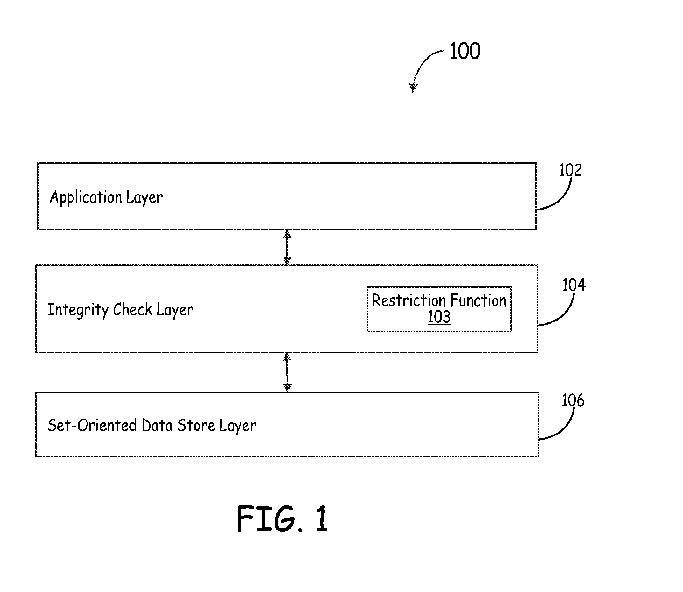

FIG. 1 is a block diagram of an embodiment of an application framework 100 for a set-oriented data store with data integrity checking. The framework 100 comprises an application layer 102, an integrity check layer 104 responsive to the application layer 102, and a set-oriented data store layer 106 responsive to both the application layer 102 and the integrity check layer 104. In at least one embodiment, the application layer 106 comprises one or more data recording applications requiring the data integrity checking provided by the integrity check layer 104. The integrity check layer 104 is a software module that accepts operation requests from the application layer 102 to insert, update, and delete individual data objects in the set-oriented data store layer 106. The integrity check layer 104 further performs requests for at least one form of query-based retrieval, as discussed in further detail below. For example, the integrity check layer 104 performs the retrieval requests on the set-oriented data store layer 106, and the integrity check layer 104 performs additional data verification processing of the query results in the set-oriented data store layer 106.

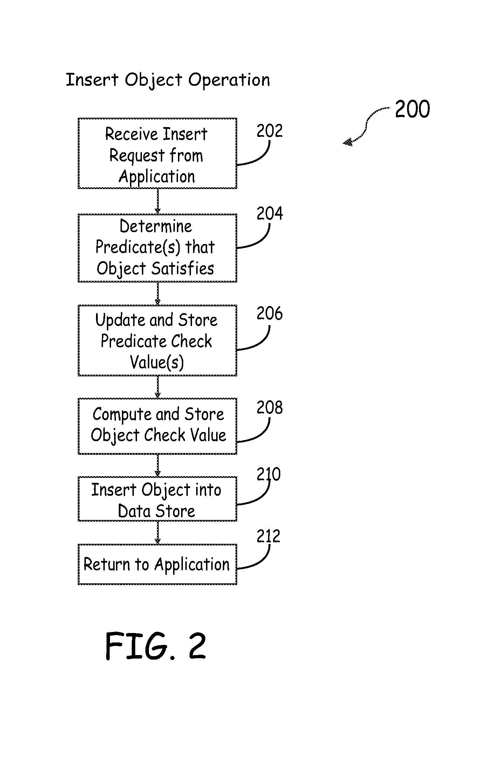

In the example embodiment of FIG. 1, the integrity check layer 104 includes a restriction function 103 on the form of predicate-based queries that the application layer 102 submits. The restriction function 103 restricts each query to at least one of a predefined set of query predicates as illustrated in FIG. 2. In one implementation, the predefined set of query predicates is defined when the overall system is designed. In at least one alternate implementation, and with respect to the embodiment shown in FIG. 2, the predefined set of query predicates is dynamically defined (block 202) before any of the data objects are inserted into the set-oriented data store layer 106 (block 210).

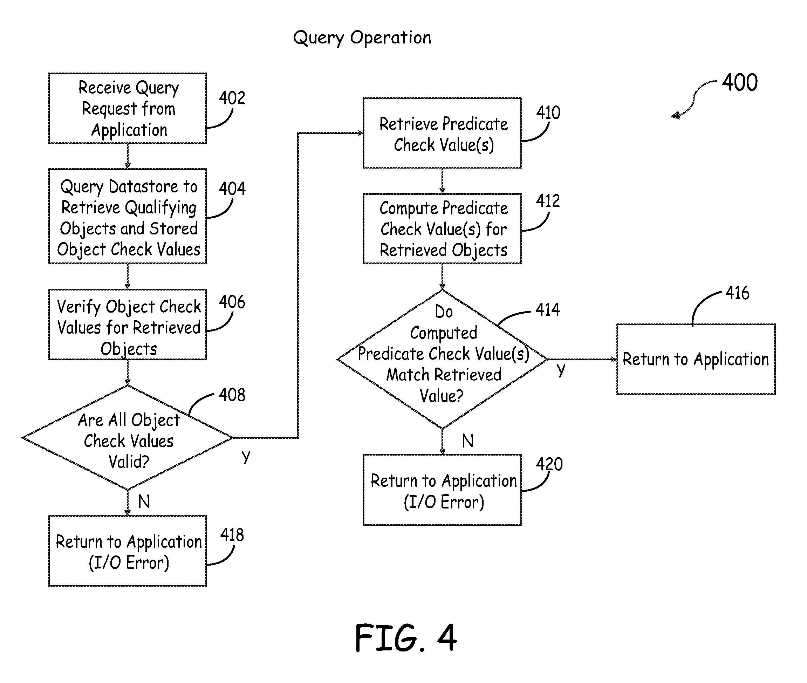

Moreover, as discussed below with respect to FIG. 4, the set of query predicates covers all data objects that the application layer 102 will retrieve from the set-oriented data store 106. In one implementation, every data object suitable for storage as a data object satisfies at least one predicate of the set of query predicates for the restriction function 103.

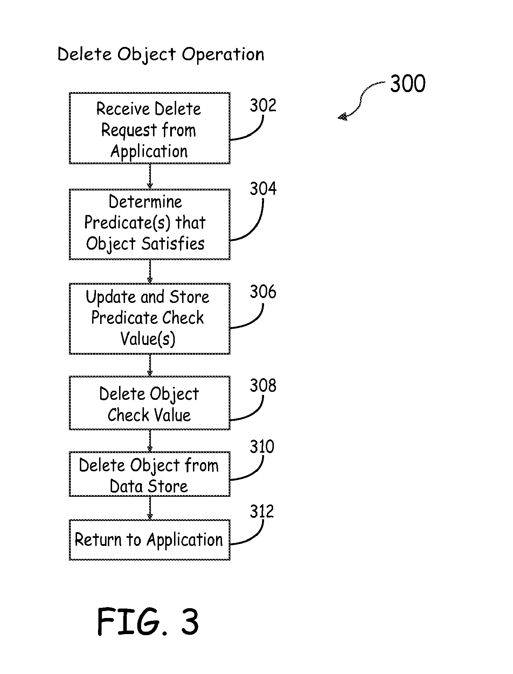

As discussed in further detail below with respect to FIGS. 2 and 3, for each predefined query predicate, the integrity check layer 104 maintains a stored predicate check value. In one implementation, the integrity check layer 104 stores the predicate check value in the set-oriented data store layer 106. The predicate check value is a mathematical combination of the object check values for those data objects in the set-oriented data store layer 106 that satisfy this predicate. An example of determining the predicate check value is discussed below.

### Determining the Predicate Check Value

To determine the predicate check value, the object check values of the retrieved data objects are bit strings of length n. In one implementation, the function that produces the object check values is pseudo-random, meaning that the probability that a randomly-selected data object has a particular object check value is approximately 2^{-*n*}. In one implementation, the predicate check value is computed as the exclusive-OR of the object check values (a bit string of length n, whose *i*^{th} bit equals 0 if the number of data objects whose object check values equal 1 in the *i*^{th} bit is even). Moreover, the use of exclusive-OR provides substantially high efficiency for maintenance of one or more stored predicate check values during data object insertion, deletion, and updates because new predicate check values are determined using only old predicate check values and the object check value of the row being inserted, updated, or deleted.

Similarly, the probability that a randomly-selected set of objects has a particular predicate check value is also 2^{-*n*} (as discussed above). For example, for a 32-bit CRC, the probability that an integrity error for a selective retrieval goes undetected (given that the integrity error actually occurs), is about one in four billion (one in 2³²).

In one embodiment, when the application layer 102 submits a query with an arbitrary predicate, the restriction function 103 finds a set of one or more predefined predicates that, together, cover the application-provided predicate (for example, the application-provided predicate comprises a disjunction of a chosen set of predefined predicates). If no such set is found, the query is not allowed. Alternatively, the integrity check layer 104 processes a separate query for each of these predefined predicates and verifies the integrity of the results as described above. In addition, the integrity check layer 104 combines (for example, takes a union of) the query results and removes any data objects that do not meet the application-provided predicate. The integrity check layer 104 returns the results to the application layer 102.

In at least one alternate embodiment, query predicates are defined in the integrity check layer 104 as logical combinations of conditions on individual data object attributes (for example, when querying a collection of data objects that have a common set of attributes, and in relational terms, querying a single table). In addition, this alternate embodiment is further extendable to queries that access multiple types of data objects, as discussed in detail below.

For example, when each of the data objects has *n* attributes (*a*₁, ..., *aₙ*), each attribute *aᵢ* is drawn from an attribute domain *Aᵢ.* Moreover, an attribute partition for the attribute domain *Aᵢ* is a partition of *Aᵢ* into disjoint subsets whose union is *Aᵢ.* The attribute partition is represented herein as a function *pᵢ*: *Aᵢ→Iᵢ,* where each member of the set *Iᵢ* is a partition index, representing a different subset within the attribute partition. For example, if *Aᵢ* is a set of character strings, then *pᵢ* (*aᵢ*) is defined to be the first character of the string. As another example, if *Aᵢ* is a set of real numbers, *pᵢ* (*aᵢ*) is defined to be *floor* (*aᵢ*/*d*), which is the largest integer that is no greater than *aᵢ*/*d.* The attribute partition divides the real numbers into intervals of length d. As yet a further example, *pᵢ* (*aᵢ*) is defined to be *aᵢ,* so that each element of *Aᵢ* is its own disjoint subset of the attribute partition.

In addition, a data object partition is a partition of the set of data objects in the set-oriented data store layer 106 based on a subset of the *n* attributes of the data objects. In one implementation, the data object partition is based on the first *m* of the n attributes, where 0 ≤ m ≤ *n.* The data object partition defines a set of query predicates {*P*_{*j*1...*jm*} |*j*₁∈*I*₁, ...,*jₘ*∈*Iₘ*}, where a data object with attributes (*a*₁, ..., *aₙ)* satisfies *P*_{*j*1*...jm*} if and only if *pᵢ*(*aᵢ*) = *jᵢ* for 1*≤i≤m.* In this same implementation, these query predicates are mutually exclusive, and every data object satisfies a particular query predicate of the set of query predicates. In the case that the objects have different data types, and do not have valid values for all *n* attributes, the integrity check layer 104 treats any missing attributes as having a distinguished value of "undefined," and the same query technique can be applied.

The integrity check layer 104 maintains a predicate check value ν for each query predicate. These are data objects of the form (*j*₁, ..., *j*ₘ, ν), and stored in the set-oriented data store layer 106. It is understood that the system 100 is capable of accommodating any appropriate number of sets of query predicates in a single system 100. In one implementation, a count of the number of data objects satisfying each predicate is maintained so that unused predicate check values are "garbage collected."

The integrity check layer 104 processes application insert, update, delete, and query requests as described above. That is, when each of the data objects with attributes (*a*₁, ..., *aₙ*) is inserted, the integrity check layer 104 updates the predicate check value (*p*₁(*a*₁), ..., *pₘ*(*aₘ*), ν*),* with similar processing for update and delete requests.

For one implementation of query processing performed in the integrity check layer 104, there are two cases: (1) when queries use one of the predefined set of query predicates, the application layer 102 supplies the data object partition indexes for the desired predicate, and processing proceeds as described above, and (2) when the application layer 102 supplies an arbitrary predicate, the integrity check layer 104 finds a set of predefined predicates from the object partition in the set-oriented data store layer 106 to cover the application-provided query predicate and processing proceeds as described below with respect to FIG. 4. Moreover, this alternate embodiment is extended by defining a plurality of data object partitions for the set-oriented data store layer 106, and selecting different subsets of the *n* attributes of the data objects, including different partitions of the n attributes. The plurality of object partitions substantially increases efficiency for processing a broader range of queries from the set-oriented data store layer 106.

As shown in FIG. 2, once the application layer 102 requests that a particular data object be inserted (block 202), the integrity check layer 104 determines which query predicate(s) the data object satisfies (block 204), updates the corresponding predicate check values (block 206), computes and stores the object check value (block 208), and passes the insert request to the underlying data store for execution (block 210) before returning operation of the application to the application layer 102 (block 212). In one implementation, the object check value is stored with the data object itself in the set-oriented data store, and block 208 is subsumed in block 210.

As shown in FIG. 3, when the application layer 102 requests that a particular data object be deleted (block 302), the integrity check layer 104 determines the predicate check value(s) that the particular data object satisfies (block 304), updates and stores the appropriate predicate check values (block 306), deletes the object check value (block 308), and passes the request to the data store (block 310) before returning operation of the application to the application layer 102 (block 312). In one implementation, when the object check value is stored with the data object itself, block 308 is subsumed in block 310. Processing for the data object update is equivalent to a delete of a previous instance of the data object followed by an insert of the updated data object.

As shown in FIG. 4, once the application layer 102 requests retrieval of the data objects that meet a particular query predicate (block 402), the integrity check layer 104 passes the request to the underlying data store (block 404). Before returning the retrieved data objects to the application layer 102, the method of FIG. 4 verifies the object check value of each of the retrieved data objects against the value previously stored (block 406). If the two values match, the data object as retrieved matches the data object as stored and is considered valid (block 408). If the two values do not match, an input/output (I/O) error is reported to the application layer 102 (block 418).

The integrity check layer 104 compares the computed predicate check value(s) for the data objects actually retrieved against the value(s) stored for the predicate(s) (blocks 410, 412). If the computed and stored values match, then (with substantially high likelihood) the set of data objects retrieved is exactly the set of data objects stored that satisfy the query predicate (block 414) before returning operation of the application to the application layer 102 (block 416). When the computed and stored values do not match, the difference is reported to the application layer 102 as an I/O error (block 420).

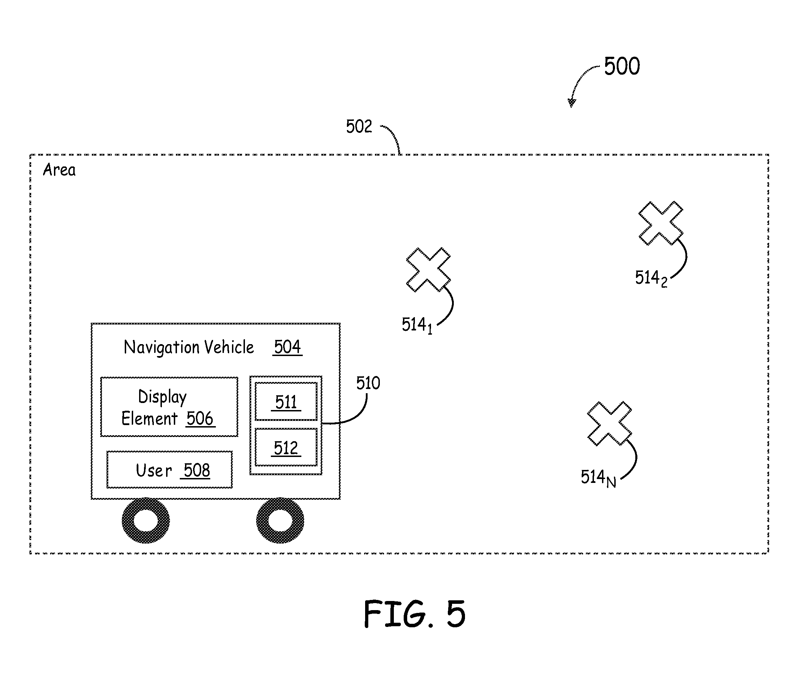

FIG. 5 is a block diagram of an embodiment of an electronic navigation system 500 for navigating within an area 502 using a vehicle 504. The vehicle 504 comprises a display element 506 operated by a user 508. The vehicle 504 further comprises at least one implementation of a safety-critical software operating system 510 having a data integrity check layer 511 and a set-oriented data store as described earlier with respect to FIGS. 1 to 4. In the example embodiment of FIG. 5, the set-oriented data store is a terrain database 512.

In one implementation, the vehicle 504 is appropriately sized for unrestricted travel within the area 502 (for example, appropriately sized as a manned navigation vehicle). The vehicle 504 travels throughout the area 502, continuously navigating from the terrain database 512 accessed via the data integrity check layer 511. The safety-critical software operating system 510 displays the terrain database 512 to the user 508 on the display element 506. The user 508 queries the terrain database 512 via the data integrity check layer 511 to determine an appropriate path for navigation through the area 502. For example, in one embodiment, the terrain database 512 comprises information about hazards 514₁ to 514_{N} to be avoided by the vehicle 504 such as minefields (and the like). Moreover, when the user 508 is querying for the minefields that the terrain database 512 contains, the safety-critical software operating system 510 uses the integrity check layer 511 to ensure that the return query contains a correct listing of all hazards and obstacles within the area 502.

Based on the set-oriented application framework discussed above with respect to FIGS. 1 to 4, the user 508 is capable of proceeding through the area 502 with a substantially high confidence level that the display element 506 is not recommending a route through a minefield comprising the hazards 514 (that is, the display element 506 provides the complete listing of safety-critical data having a full application value as discussed above). Alternatively, the display element 506 indicates to the user when one or more of the data objects are missing or extraneous (that is, a safe but reduced application value is currently available from the display element 506).

While the embodiments disclosed have been described in the context of an electronic system for data recording, apparatus embodying these techniques are capable of being distributed in the form of a machine-readable storage medium of instructions and a variety of computer program products for any particular type of signal bearing media actually used to carry out the distribution. Examples of machine-readable storage media include recordable-type media, such as a portable memory device; a hard disk drive (HDD); a random-access memory (RAM); a read-only memory (ROM); transmission-type media, such as digital and analog communications links; and wired or wireless communications links using transmission forms, such as radio frequency and light wave transmissions. The variety of program products may take the form of coded formats that are decoded for actual use in a particular electronic system for data recording by a combination of digital electronic circuitry and software residing in a programmable processor (for example, a general-purpose processor in a computer).

At least one embodiment disclosed herein is implemented by program product modules comprising the machine-readable storage medium of instructions that are executed by the programmable processor. Generally, the program product modules include routines, programs, objects, data components, data structures, and algorithms that perform particular tasks or implement particular abstract data types. The program product modules represent examples of executing the embodiments disclosed.

This description has been presented for purposes of illustration, and is not intended to be exhaustive or limited to the embodiments disclosed. Variations and modifications may occur, which fall within the scope of the following claims.

## Claims

1. A method for determining data integrity in a set-oriented data store, the method comprising:
providing an integrity check mechanism within an application framework (100) for a set-oriented data store (512), the application framework operable to provide object check values for one or more data objects (514) in the set-oriented data store;
using the integrity check mechanism to store one or more predicate check values corresponding to predefined query predicates against the set-oriented data store, with each stored predicate check value updated as the set-oriented data store is updated such that the stored predicate check value is consistent with the object check values of all of the data objects that satisfy the corresponding predefined query predicate (406); and
when a query (400) is submitted to the set-oriented data store to access at least a portion of data within the data objects, verifying the integrity of a query result set containing the accessed data by comparing one or more of the previously-stored predicate check values for the submitted query with corresponding predicate check values determined from the query result set (414).

2. The method of claim 1, wherein the integrity check mechanism ensures that any potential corruption of data within the set-oriented data store is detected and isolated with a substantially high level of assurance.

3. The method of claim 1, further comprising:
storing the object check value for each of the one or more data objects with the data object in the set-oriented data store.

4. The method of claim 1, wherein verifying the integrity of the query result set further comprises restricting the data query to the predefined query predicates associated with the one or more previously-stored predicate check values (103).

5. The method of claim 1, wherein verifying the integrity of the query result set further comprises:
determining whether one or more of the data objects returned with the query result set do not match the submitted query; and
removing the data objects that do not match from the query result set.
